# EUROPEAN PATENT APPLICATION

(11) **EP 4 068 225 A2**
(43) Date of publication of application: **05.10.2022**
(21) Application number: 22189831.5
(22) Date of filing: 11.08.2022
(51) Int. Cl.: G06V 30/40

(54) **METHOD FOR TRAINING TEXT POSITIONING MODEL AND METHOD FOR TEXT POSITIONING**

(30) Priority: 23.08.2021 CN 202110970305
(71) Applicant: Beijing Baidu Netcom Science Technology Co., Ltd., Beijing 100085 (CN)
(72) Inventor: HUANG, Ju, Beijing, 100085 (CN); LI, Yulin, Beijing, 100085 (CN); WANG, Peng, Beijing, 100085 (CN); XIE, Qunyi, Beijing, 100085 (CN); QIN, Xiameng, Beijing, 100085 (CN); YAO, Kun, Beijing, 100085 (CN)
(74) Representative: Maiwald Patent- und Rechtsanwaltsgesellschaft mbH

(57) **Abstract**

A method for training a text positioning model is provided, which relates to invention OCR application scenarios. The method includes: obtaining a sample image containing a sample text to be positioned and a text marking box for the sample text; inputting the sample image into a text positioning model to position the sample text, and outputting a prediction text box for the sample image; obtaining a sample prior anchor box corresponding to the sample image; and adjusting model parameters of the text positioning model based on the sample prior anchor box, the text marking box and the prediction text box, and continuing training the adjusted text positioning model based on a next sample image until model training is completed, to generate a target text positioning model. Therefore, the invention may reduce time consumption and difficulties of model training process, and improve the reliability of the model training result.

## Description

### TECHNICAL FIELD

The invention relates to the field of computer technology, especially the field of artificial intelligence (AI), in particular to the field of computer vision and deep learning technologies.

### BACKGROUND

In recent years, with the rapid development of AI technologies, text positioning has also been widely used. In particular, more and more attention has been paid to the text positioning of images containing text (such as invoice/bill). Invoice is an important text carrier with structured information and is widely used in various business scenarios. Despite increasing popularity of electronic invoices, traditional paper invoices are still wildly used.

### SUMMARY

The embodiments of the invention provide a method for training a text positioning model and a method for text positioning.

According to a first aspect of the invention, a computer-implemented method for training a text positioning model is provided. The method includes: obtaining a sample image, where the sample image contains a sample text to be positioned and a text marking box for the sample text; inputting the sample image into a text positioning model to be trained to position the sample text, and outputting a prediction text box for the sample image; obtaining a sample prior anchor box corresponding to the sample image; and adjusting model parameters of the text positioning model based on the sample prior anchor box, the text marking box and the prediction text box, and continuing training the adjusted text positioning model based on a next sample image until model training is completed, to generate a target text positioning model.

In some examples, adjusting the model parameters of the text positioning model based on the sample prior anchor box, the text marking box and the prediction text box includes: obtaining a first loss function based on the sample prior anchor box and the text marking box; obtaining a second loss function based on the text marking box and the prediction text box; obtaining a loss function of the text positioning model based on the first loss function and the second loss function; and adjusting the model parameters of the text positioning model based on the loss function.

In some examples, obtaining the first loss function based on the sample prior anchor box and the text marking box includes: obtaining the first loss function based on attribute information of the text marking box and attribute information of the sample prior anchor box.

In some examples, obtaining the first loss function based on the attribute information of the text marking box and the attribute information of the sample prior anchor box, includes: obtaining a first distance between an X-axis corner point and a center point of the text marking box, and a second distance between a Y-axis corner point and the center point of the text marking box; obtaining a length and a width of the sample prior anchor box; obtaining a first ratio of the first distance to the width, and a second ratio of the second distance to the length; and obtaining the first loss function based on the first ratio and the second ratio.

In some examples, the center point of the text marking box coincides with a center point of the sample prior anchor box.

In some examples, obtaining the sample prior anchor box corresponding to the sample image includes: obtaining a feature map corresponding to the sample image by performing feature extraction on the sample image; and obtaining a matched sample prior anchor box based on the feature map.

In some examples, obtaining the matched sample prior anchor box based on the feature map includes: obtaining at least one sample text to be positioned based on the feature map; obtaining a size of each of the at least one sample text to be positioned; and obtaining the sample prior anchor box corresponding to the size of each sample text to be positioned.

According to a second aspect of the invention, a computer-implemented method for text positioning is provided. The method includes: obtaining an image containing a text to be positioned; and inputting the image into a target text positioning model to position the text to be positioned, and outputting a target text box for the image, in which the target text positioning model is generated by obtaining a sample image, where the sample image contains a sample text to be positioned and a text marking box for the sample text; inputting the sample image into a text positioning model to position the sample text, and outputting a prediction box for the sample image; obtaining a prior anchor box corresponding to the sample image; and adjusting model parameters of the text positioning model based on the prior anchor box, the text marking box and the prediction box, and continuing training the adjusted text positioning model based on a next sample image until model training is completed.

According to a third aspect of the invention, an electronic device is provided. The electronic device includes: at least one processor and a memory communicatively coupled to the at least one processor. The memory stores instructions executable by the at least one processor. When the instructions are executed by the at least one processor, the processor is configured to perform: obtaining a sample image, where the sample image contains a sample text to be positioned and a text marking box for the sample text; inputting the sample image into a text positioning model to be trained to position the sample text, and outputting a prediction text box for the sample image; obtaining a sample prior anchor box corresponding to the sample image; and adjusting model parameters of the text positioning model based on the sample prior anchor box, the text marking box and the prediction text box, and continuing training the adjusted text positioning model based on a next sample image until model training is completed, to generate a target text positioning model.

According to the embodiments of the invention, regression prediction does not need to be performed from scratch in the model training process, thus reducing time consumption and difficulties of model training process, and improving the reliability of the model training result.

It should be understood that the content described in this section is not intended to identify key or important features of the embodiments of the invention, nor is it intended to limit the scope of the invention. Additional features of the invention will be easily understood based on the following description.

### BRIEF DESCRIPTION OF THE DRAWINGS

The drawings are used to better understand the solution and do not constitute a limitation to the invention, in which:
FIG. 1 is a schematic diagram of a first embodiment of the invention.
FIG. 2 is a schematic diagram of a sample image according to the invention.
FIG. 3 is a schematic diagram of a prediction text box according to the invention.
FIG. 4 is a schematic diagram of a second embodiment of the invention.
FIG. 5 is a schematic diagram of a third embodiment of the invention.
FIG. 6 is a schematic diagram of a fourth embodiment of the invention.
FIG. 7 is a schematic diagram of a text marking box and a sample prior anchor box according to the invention.
FIG. 8 is a schematic diagram of a fifth embodiment of the invention.
FIG. 9 is a block diagram of an apparatus for training a text positioning model used to implement the method for training a text positioning model according to an embodiment of the invention.
FIG. 10 is a block diagram of a text positioning apparatus for implementing a method for text positioning according to an embodiment of the invention.
FIG. 11 is a block diagram of an electronic device used to implement a method for training a text positioning model or a method for text positioning according to the embodiment of the invention.

### DETAILED DESCRIPTION

The following describes the exemplary embodiments of the invention with reference to the accompanying drawings, which includes various details of the embodiments of the invention to facilitate understanding, which shall be considered merely exemplary. For clarity and conciseness, descriptions of well-known functions and structures are omitted in the following description.

The following briefly describes the technical field involved in the solution of the invention.

For computer technology, the contents of computer technology are wide and may be roughly divided into several aspects such as computer system technology, computer device technology, computer component technology and computer assembly technology. The computer technology includes: basic principles of computing methods and design of arithmetic units, an instruction system, a central processing unit (CPU) design, pipeline principle and its application in CPU design, a storage system, a bus, and an input and output.

AI is a discipline that allows computers to simulate certain human thinking processes and intelligent behaviors (such as learning, reasoning, thinking and planning), which has both hardware-level technology and software-level technology. The AI software technologies generally include computer vision technology, speech recognition technology, natural language processing (NLP) and machine learning (ML)/depth learning (DL), big data processing technology, knowledge graph technology and other major directions.

Computer vision is a science that studies how to make machines "see", it further refers to the use of machine vision (such as cameras and computers) instead of human eyes to identify, track, and measure targets, and further perform graphic processing, so that the processed image may become more suitable for the human eyes to observe or for transmitting to an instrument for detection after being processed by the computers. As a scientific discipline, the computer vision studies related theories and technologies, and tries to build AI systems that may obtain "information" from images or multi-dimensional data.

The DL learns inherent laws and representation levels of sample data. The information obtained during these learning processes is of great help in the interpretation of data such as texts, images and sounds. The DL ultimate goal is to enable machines to have the ability to analyze and learn like humans, and to recognize data such as words, images and sounds. The DL is a complex ML algorithm that has achieved results in speech and image recognition far exceeding previous related art. The DL has achieved many results in search technology, data mining, ML, machine translation, NLP, multimedia learning, speech, recommendation and personalization technology, and other related fields. The DL enables machines to imitate human activities such as audio-visual and thinking, to solve many complex pattern recognition problems, which makes great progress in AI-related technologies.

Since there are all kinds of invoices having complex layouts and numerous items, it is often difficult to guarantee the accuracy of a text positioning result. At the same time, the text positioning process for massive invoices generally takes a lot of labor costs, which may lead to extremely low efficiency of the text positioning process, thus affecting the efficiency of checking/reviewing invoices, billing and other services.

In the related art, in the text positioning process, with the help of the rapid development of optical character recognition (OCR) technology, automated checking/reviewing methods are gradually replacing manual reviewing methods. However, due to complex and diverse layouts of invoices, a large number of overlapping texts, and different lengths of text lines, the current methods for text positioning based on segmentation or detection cannot achieve an expected performance in application scenarios such as OCR.

Therefore, how to improve the efficiency and reliability of the text positioning process has become one of the important research directions.

A method for training a text positioning model and a method for text positioning are descried according to the embodiments of the invention with reference to the accompanying drawings.

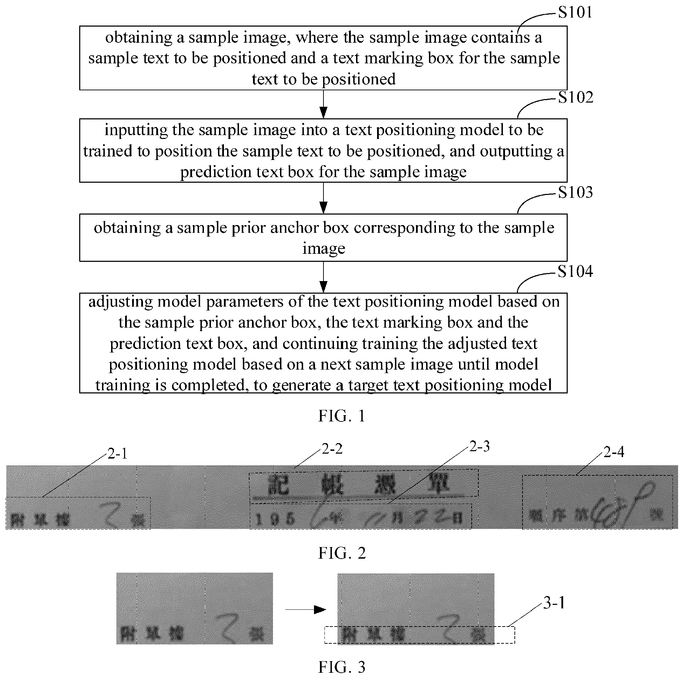

FIG. 1 is a schematic diagram of a first embodiment of the invention.

As illustrated in FIG. 1, the method for training a text positioning model according to the embodiments of the invention includes the following steps.

In S101, a sample image is obtained. The sample image contains a sample text to be positioned and a text marking box for the sample text to be positioned.

The sample image may be any image that has been marked with a text positioning result, which contains the sample text to be positioned and the text marking box for the sample text to be positioned.

For example, as illustrated in FIG. 2, the sample image may be a collected bookkeeping voucher image. The sample image includes 4 text marking boxes represented by 2-1 to 2-4, and the text marking box includes a sample text to be positioned.

It should be noted that, the number of sample images is not limited in the invention, and may be obtained according to actual conditions.

For example, 1000 sample images may be obtained. In this case, the 1000 sample images include a total of 1000 sample texts to be positioned and 1000 corresponding text marking boxes.

In S102, the sample image is input into a text positioning model to be trained, to position the sample text to be positioned, and a prediction text box for the sample image is output.

In the embodiment of the invention, after the sample image is obtained, the text positioning model to be trained may be trained based on the sample image. Optionally, the sample image may be input into the text positioning model to be trained, to position the sample text to be positioned, and the prediction text box of the sample image is output.

For example, as illustrated in FIG. 3, taking the image area corresponding to any text marking box (2-1) in FIG. 2 as an example, the sample image is input into the text positioning model to be trained to position the sample text to be positioned, the prediction text box 3-1 of the sample image may be obtained.

In S103, a sample prior anchor box corresponding to the sample image is obtained.

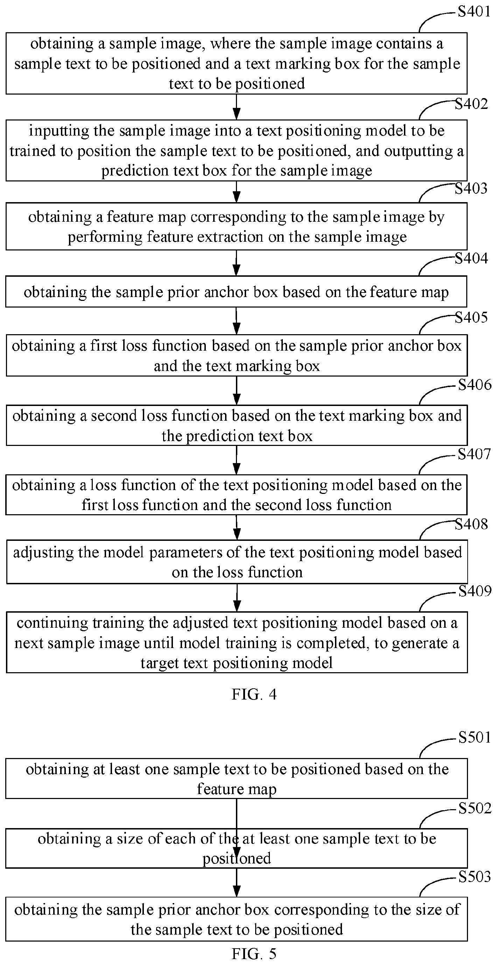

The sample prior anchor box may be any sample prior anchor box corresponding to the sample image. In some examples, the sample prior anchor box may refer to a reference box for positioning and marking target text in an image, and the reference box may be determined based on each feature point of a feature map, which may be described in combination with FIG. 4 and FIG. 5.

It should be noted that, in the invention, the number of sample prior anchor boxes is not less than the number of sample images. That is, at least one sample prior anchor box corresponding to each sample image is obtained.

It should be noted that the invention does not limit the specific manner of obtaining the sample prior anchor box, and may be selected according to the actual situations. For example, a business vertical category corresponding to the sample image may be obtained, and the corresponding sample prior anchor box may be obtained based on the business vertical category. In some examples, the business vertical category may refer to a vertical category to which the sample image content belongs. For example, a feature map of the sample image may be obtained, and the corresponding sample prior anchor box may be obtained based on the feature map.

In S104, model parameters of the text positioning model are adjusted based on the sample prior anchor box, the text marking box and the prediction text box, and training the adjusted text positioning model continues based on the next sample image, until model training is completed, to generate a target text positioning model.

In the embodiment of the invention, after the sample prior anchor box, the text marking box and the prediction text box are obtained, the model parameters of the text positioning model may be adjusted based on the sample prior anchor box, the text marking box and the prediction text box. Training the adjusted text positioning model continues based on the next sample image until the model training end conditions are satisfied. Then, the model obtained after adjusting the model parameters for the last time is used as the target text positioning model. The training end conditions may be set according to the actual situations, which is not limited in the invention.

Optionally, the training end condition may be set as a difference between the prediction text box and the text marking box being less than a preset difference threshold. For example, the training end condition may be set as the difference between the prediction text box and the text marking box being less than 95%.

According to the method for training a text positioning model according to the embodiments of the invention, the sample image is obtained. The sample image is input into the text positioning model to be trained to position the sample text to be positioned, and the prediction text box is output for the sample image. The sample prior anchor box corresponding to the sample image is obtained. The model parameters of the text positioning model are adjusted based on the sample prior anchor box, the text marking box and the prediction text box. The adjusted text positioning model is continually trained based on the next sample image until model training is completed, to generate the target text positioning model. In this way, the training of the text positioning model is achieved. The invention introduces the sample prior anchor box as a reference to the acquisition of the prediction text box in the model training process, so that regression prediction does not need to be performed from scratch in the model training process, thus reducing time consumption and difficulties of model training process, and improving the reliability of the model training result.

FIG. 4 is a schematic diagram of a second embodiment of the invention.

As illustrated in FIG. 4, on the basis of the above-mentioned embodiments, the method for training a text positioning model according to the invention specifically includes the following steps.

In S401, a sample image is obtained. The sample image contains a sample text to be positioned and a text marking box for the sample text to be positioned.

In S402, the sample image is input into a text positioning model to be trained, to position the sample text to be positioned, and a prediction text box for the sample image is output.

The steps S401-S402 are consistent with the above steps S101-S102, which are not repeated here.

The specific process of acquiring the sample prior anchor box corresponding to the sample image in step S103 in the previous embodiments includes the following steps at S403-S404.

In S403, a feature map corresponding to the sample image is obtained by performing feature extraction on the sample image.

It should be noted that, in the invention, the sample prior anchor boxes in different sizes may be set for each of the feature points on the feature map. Therefore, when obtaining the sample prior anchor box, feature extraction may be performed on the sample image firstly to obtain the feature map corresponding to the sample image.

In S404, the sample prior anchor box is obtained based on the feature map.

In a possible implementation, as illustrated in FIG. 5, on the basis of the above-mentioned embodiments, the method specifically includes the following steps at S501-S503.

In S501, at least one sample text to be positioned is obtained based on the feature map.

It should be noted that, any feature point on the feature map may correspond to a sample text to be position in a unique size, or may correspond to sample texts to be positioned in different sizes. In this case, after the feature map is acquired, at least one sample text to be positioned may be obtained based on the feature map.

In S502, a size of each of the at least one sample text to be positioned is obtained.

In S503, the sample prior anchor box corresponding to the size of each sample text to be positioned is obtained.

In the embodiment of the invention, in the case where the feature point on the feature map correspond to the sample texts to be positioned in different sizes, the problem of text overlap may be alleviated by assigning different sample prior anchor boxes.

In the previous embodiment in step S104, the specific process of adjusting the model parameters of the text positioning model based on the sample prior anchor box, the text marking box and the prediction text box includes the following steps at S405-S408.

In S405, a first loss function is obtained based on the sample prior anchor box and the text marking box.

In this embodiment of the invention, the first loss function may be obtained based on attribute information of the text marking box and attribute information of the sample prior anchor box.

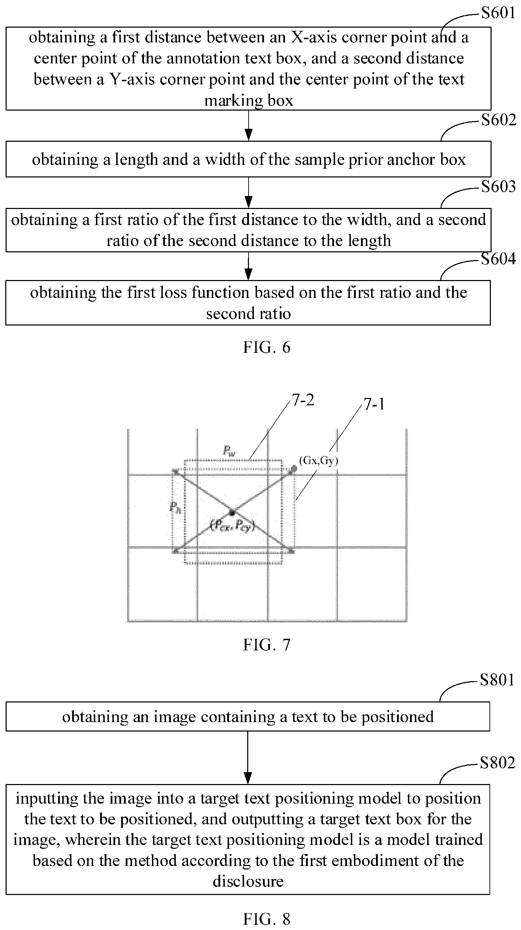

In a possible implementation, as illustrated in FIG. 6, on the basis of the above embodiment, the method further includes the following steps at S601-S604.

In S601, a first distance between an X-axis corner point and a center point of the text marking box, and a second distance between a Y-axis corner point and the center point of the text marking box are obtained.

It should be noted that, there are 4 X-axis corner points in the text marking box, and the distance between any X-axis corner point and the center point is equal. Therefore, after obtaining the distance between any X-axis corner point and the center point of the text marking box, the distance is determined as the first distance.

It should be noted that, there are 4 Y-axis corner points in the text marking box, and the distance between any Y-axis corner point and the center point is equal. Therefore, after obtaining the distance between any Y-axis corner point and the center point of the text marking box, the distance is determined as the second distance.

In S602, a length and a width of the sample prior anchor box are obtained.

The center point of the text marking box coincides with the center point of the sample prior anchor box.

For example, as illustrated in FIG. 7, the first distance between the X-axis corner point Gₓ and the center point (P_{cx}, P_{cy}) of the text marking box 7-1 is d₁=Gₓ-P_{cx}, and the second distance between the Y-axis corner point G_{y} and the center point (P_{cx}, P_{cy}) of the text marking box 7-1 is d₂=G_{y}-P_{cy}.

Further, the length Pₕ and the width P_{w} of the sample prior anchor box 7-2 are obtained.

In S603, a first ratio of the first distance to the width, and a second ratio of the second distance to the length are obtained.

For example, for the first distance di, the length Pₕ, the second distance d₂, and the width P_{w}, the first ratio k₁=d₁/P_{w} may be obtained, that is, k₁= (Gₓ-P_{cx})/P_{w}. The second ratio is k₂-d₂/Pₕ, that is, k₂= (G_{y}-P_{cy}) /Pₕ.

In S604, the first loss function is obtained based on the first ratio and the second ratio.

It should be noted that a mapping relationship between the first and second ratios and first loss functions is preset in the invention. After obtaining the first ratio and the second ratio, the first loss function is obtained by querying the mapping relationship.

In S406, a second loss function is obtained based on the text marking box and the prediction text box.

In the embodiment of the invention, after the prediction text box is obtained, a difference between the text marking box and the prediction text box may be obtained. Further, by querying a preset mapping relationship between differences and second loss functions, the second loss function may be obtained.

In S407, a loss function of the text positioning model is obtained based on the first loss function and the second loss function.

It should be noted that the invention does not limit the specific manner of obtaining the loss function of the text positioning model based on the first loss function and the second loss function.

For example, a sum of the first loss function and the second loss function may be used as the loss function of the text positioning model. For another example, a product of the first loss function and the second loss function may be determined as the loss function of the text positioning model. For another example, a weighted result of the first loss function and the second loss function may be determined as the loss function of the text positioning model.

In S408, the model parameters of the text positioning model are adjusted based on the loss function.

In S409, training the adjusted text positioning model continues based on the next sample image until model training is completed, to generate a target text positioning model.

Step S409 is consistent with the above step S104, which will not be repeated here.

According to a method for training a text positioning model in an embodiment of the invention, the first loss function may be obtained based on the sample prior anchor box and the text marking box, and the second loss function may be obtained based on the text marking box and the prediction text frame. The loss function of the text positioning model is obtained based on the first loss function and the second loss function. In this way, the time consumption of the loss function determination process is reduced, the time consumption and difficulties in the model training process are further reduced, thus the reliability of the model training result is improved.

FIG. 8 is a schematic diagram of a fifth embodiment of the invention.

As illustrated in FIG. 8, a method for text positioning according to this embodiment includes the following steps.

In S801, an image containing a text to be positioned is obtained.

The image may be any image including the text to be positioned.

In S802, the image is input into a target text positioning model to position the text to be positioned, and a target text box for the image is output, in which the target text positioning model is a model trained based on the training method according to the first embodiment of the invention.

In the embodiment of the invention, after the image is obtained, the image may be input into the trained target text positioning model to position the text to be positioned, so as to output the target text box of the image. In this case, the target text box is the text positioning result for the image.

According to a method for text positioning according to an embodiment of the invention, the image including the text to be positioned may be obtained. Then the image is input into the target text positioning model to position the text to be positioned, and the target text box for the image is output, to achieve text positioning. Thus, the invention positions the text in the image through the converged target text positioning model that is obtained by training based on the sample prior anchor box, thus improving the accuracy and reliability of the text positioning process.

It should be noted that, in the related art, the text model training and text positioning are performed based on a segmentation-based method for text positioning and a method for text positioning based on an anchor box.

For the segmentation-based method for text positioning, the response of each pixel in the image to the text may be directly predicted, which may better handle the problem of long text. However, when there are a text overlapping, the response of the pixel to the text cannot distinguish which field the overlapped text belongs to.

For the method for text positioning based on anchor box, such as efficient and accuracy scene text (EAST), when each grid point in the image has a text response, the four corners of the text are predicted. However, due to the difficulty of accurately distinguishing positive and negative samples, it may cause difficulty in dealing with the occlusion problem.

In conclusion, the method for text positioning and the method for training a text positioning model according to the invention are different from the segmentation-based method for text positioning and the method for text positioning based on the anchor box in the related art, which has advantages, such as enabling that regression prediction does not need to be performed from scratch in the model training process, reducing time consumption and difficulties of model training process, and improving the reliability of the model training result.

In the technical solution of the invention, the acquisition, storage and application of the involved user personal information all comply with the provisions of relevant laws and regulations, and do not violate public order and good customs.

Corresponding to the above embodiments, the embodiment of the invention also provides an apparatus for training a text positioning model. Since the apparatus for training a text positioning model according to the embodiment of the invention corresponds to the method for training a text positioning model according to the above embodiments, the implementation of the method for training a text positioning model is also applicable to the apparatus for training a text positioning model, which will not be described in detail in this embodiment.

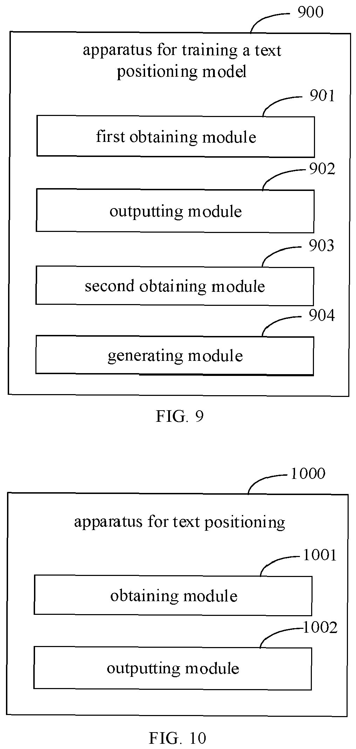

FIG. 9 is a schematic diagram of an apparatus for training a text positioning model according to an embodiment of the invention.

As illustrated in FIG. 9, the apparatus 900 for training a text positioning model includes: a first obtaining module 901, an outputting module 902, a second obtaining module 903 and a generating module 904.

The first obtaining module 901 is configured to obtain a sample image containing a sample text to be positioned and a text marking box for the sample text to be positioned.

The outputting module 902 is configured to input the sample image into a text positioning model to be trained to position the sample text to be positioned, and output a prediction text box for the sample image.

The second obtaining module 903 is configured to obtain a sample prior anchor box corresponding to the sample image.

The generating module 904 is configured to adjust model parameters of the text positioning model based on the sample prior anchor box, the text marking box and the prediction text box, and continue training the adjusted text positioning model based on the next sample image until model training is completed, to generate a target text positioning model.

The generating module 904 is further configured to: obtain a first loss function based on the sample prior anchor box and the text marking box; obtain a second loss function based on the text marking box and the prediction text box; obtain a loss function of the text positioning model based on the first loss function and the second loss function; and adjust the model parameters of the text positioning model based on the loss function.

The generating module 904 is further configured to: obtain the first loss function based on attribute information of the text marking box and attribute information of the sample prior anchor box.

The generating module 904 is further configured to: obtain a first distance between an X-axis corner point and a center point of the text marking box, and a second distance between a Y-axis corner point and the center point of the text marking box; obtain a length and a width of the sample prior anchor box; obtain a first ratio of the first distance to the width, and a second ratio of the second distance to the length; and obtain the first loss function based on the first ratio and the second ratio.

The center point of the text marking box coincides with a center point of the sample prior anchor box.

The second obtaining module 903 is further configured to: obtain a feature map corresponding to the sample image by performing feature extraction on the sample image; and obtain the sample prior anchor box based on the feature map.

With the apparatus for training a text positioning model according to the embodiments of the invention, the sample image is obtained. The sample image is input into the text positioning model to be trained to position the sample text to be positioned, and the prediction text box is output for the sample image. The sample prior anchor box corresponding to the sample image is obtained. The model parameters of the text positioning model are adjusted based on the sample prior anchor box, the text marking box and the prediction text box. The adjusted text positioning model is continually trained based on the next sample image until model training is completed, to generate the target text positioning model. In this way, the training of the text positioning model is achieved. The invention introduces the sample prior anchor box as a reference for the acquisition of the prediction text box in the model training process, thus regression prediction does not need to be performed from scratch in the model training process, thus reducing time consumption and difficulties of model training process, and improving the reliability of the model training result.

FIG. 10 is a schematic diagram of a text positioning apparatus according to an embodiment of the invention.

As illustrated in FIG. 10, the text positioning apparatus 1000 includes: an obtaining module 1001 and an outputting module 1002.

The obtaining module 1001 is configured to obtain an image containing a text to be positioned.

The outputting module 1002 is configured to input the image into a target text positioning model to position the text to be positioned, and output a target text box for the image, in which the target text positioning model is a model trained based on the training method according to any one of claims 1-7.

With the text positioning apparatus according to the embodiments of the invention, the image containing the text to be positioned is obtained. The image is input into the target text positioning model to position the text to be positioned, and the target text box is output for the image, to achieve text positioning. Thus, the invention positions the text in the image through the converged target text positioning model obtained by training based on the sample prior anchor box, thus improving the accuracy and reliability of the text positioning process.

According to the embodiments of the invention, the invention also provides an electronic device, a readable storage medium and a computer program product.

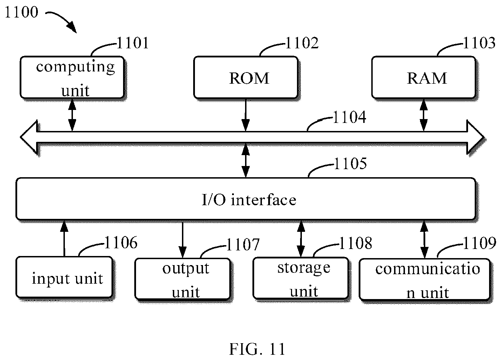

FIG. 11 is a block diagram of an example electronic device 1100 used to implement the embodiments of the invention. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the invention described and/or required herein.

As illustrated in FIG. 11, the device 1100 includes a computing unit 1101 performing various appropriate actions and processes based on computer programs stored in a read-only memory (ROM) 1102 or computer programs loaded from the storage unit 1108 to a random access memory (RAM) 1103. In the RAM 1103, various programs and data required for the operation of the device 1100 are stored. The computing unit 1101, the ROM 1102, and the RAM 1103 are connected to each other through a bus 1104. An input/output (I/O) interface 1105 is also connected to the bus 1104.

Components in the device 1100 are connected to the I/O interface 1105, including: an inputting unit 1106, such as a keyboard, a mouse; an outputting unit 1107, such as various types of displays, speakers; a storage unit 1108, such as a disk, an optical disk; and a communication unit 1109, such as network cards, modems, and wireless communication transceivers. The communication unit 1109 allows the device 1100 to exchange information/data with other devices through a computer network such as the Internet and/or various telecommunication networks.

The computing unit 1101 may be various general-purpose and/or dedicated processing components with processing and computing capabilities. Some examples of computing unit 1101 include, but are not limited to, a central processing unit (CPU), a graphics processing unit (GPU), various dedicated AI computing chips, various computing units that run ML model algorithms, and a digital signal processor (DSP), and any appropriate processor, controller and microcontroller. The computing unit 1001 executes the various methods and processes described above, such as a method for training a text positioning model or a method for text positioning. For example, in some embodiments, the method for training a text positioning model or the method for text positioning may be implemented as computer software programs, which are tangibly contained in a machine-readable medium, such as the storage unit 1108. In some embodiments, part or all of the computer program may be loaded and/or installed on the device 1100 via the ROM 1102 and/or the communication unit 1109. When the computer program is loaded on the RAM 1103 and executed by the computing unit 1101, one or more steps of the method for training a text positioning model or the method for text positioning described above may be executed. Alternatively, in other embodiments, the computing unit 1101 may be configured to perform the above method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the invention may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the invention, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein may be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and a block-chain network.

The computer system may include a client and a server. The client and server are generally remote from each other and interacting through a communication network. The client-server relation is generated by computer programs running on the respective computers and having a client-server relation with each other. The server may be a cloud server, a server of a distributed system, or a server combined with a block-chain.

The invention also provides a computer program product including computer programs. When the computer programs are executed by a processor, the above method for training a text positioning model or the method for text positioning is implemented.

It should be understood that the various forms of processes shown above may be used to reorder, add or delete steps. For example, the steps described in the invention could be performed in parallel, sequentially, or in a different order, as long as the desired result of the technical solution disclosed in the invention is achieved, which is not limited herein.

## Claims

1. A computer-implemented method for training a text positioning model, comprising:
obtaining (S101, S401) a sample image, wherein the sample image contains a sample text to be positioned and a text marking box (2-1, 2-2, 2-3, 2-4; 3-1; 7-1) for the sample text;
inputting (S102, S402) the sample image into a text positioning model to be trained to position the sample text, and outputting a prediction text box for the sample image;
obtaining (S103) a sample prior anchor box (7-2) corresponding to the sample image; and
adjusting (S104, S409) model parameters of the text positioning model based on the sample prior anchor box, the text marking box and the prediction text box, and continuing training the adjusted text positioning model based on a next sample image until model training is completed, to generate a target text positioning model.

2. The method of claim 1, wherein adjusting the model parameters of the text positioning model, comprises:
obtaining (S405) a first loss function based on the sample prior anchor box and the text marking box;
obtaining (S406) a second loss function based on the text marking box and the prediction text box;
obtaining (S407) a third loss function of the text positioning model based on the first loss function and the second loss function; and
adjusting (S408) the model parameters of the text positioning model based on the third loss function.

3. The method of claim 2, wherein obtaining the first loss function comprises:
obtaining the first loss function based on attribute information of the text marking box and attribute information of the sample prior anchor box.

4. The method of claim 3, wherein obtaining the first loss function based on the attribute information of the text marking box and the attribute information of the sample prior anchor box, comprises:
obtaining (S601) a first distance between an X-axis corner point and a center point of the text marking box, and a second distance between a Y-axis corner point and the center point of the text marking box;
obtaining (S602) a length and a width of the sample prior anchor box;
obtaining (S603) a first ratio of the first distance to the width, and a second ratio of the second distance to the length; and
obtaining (S604) the first loss function corresponding to the first ratio and the second ratio based on a first preset mapping relationship.

5. The method of claim 4, wherein the center point of the text marking box coincides with a center point of the sample prior anchor box.

6. The method of any one of claims 1 to 5, wherein obtaining the sample prior anchor box corresponding to the sample image comprises:
obtaining (S403) a feature map corresponding to the sample image by performing feature extraction on the sample image; and
obtaining (S404) a matched sample prior anchor box based on the feature map.

7. The method of claim 6, wherein obtaining the matched sample prior anchor box comprises:
obtaining (S501) at least one sample text to be positioned based on the feature map;
obtaining (S502) a size of each of the at least one sample text to be positioned; and
obtaining (S503) the matched sample prior anchor box corresponding to the size of each sample text to be positioned.

8. A computer-implemented method for text positioning, comprising:
obtaining (S801) an image containing a text to be positioned; and
inputting (S802) the image into a target text positioning model to position the text to be positioned, and outputting a target text box for the image, wherein the target text positioning model is a model trained based on the method according to any one of claims 1-7.

9. An apparatus (900) for training a text positioning model, comprising:
a first obtaining module (901), configured to obtain a sample image, wherein the sample image contains a sample text to be positioned and a text marking box for the sample text to be positioned;
an outputting module (902), configured to input the sample image into a text positioning model to be trained to position the sample text to be positioned, and output a prediction text box for the sample image;
a second obtaining module (903), configured to obtain a sample prior anchor box corresponding to the sample image; and
a generating module (904), configured to adjust model parameters of the text positioning model based on the sample prior anchor box, the text marking box and the prediction text box, and continue training the adjusted text positioning model based on the next sample image until model training is completed, to generate a target text positioning model.

10. An apparatus (1000) for text positioning, comprising:
an obtaining module (1001), configured to obtain an image containing a text to be positioned; and
an outputting module (1002), configured to input the image into a target text positioning model to position the text to be positioned, and output a target text box for the image, wherein the target text positioning model is a model trained based on the method according to any one of claims 1-7.

11. A computer-readable storage medium having computer programs stored thereon, wherein when the programs are executed by a processor, the method according to any one of claims 1-7 or the method according to 8 is implemented.

12. A computer program product comprising computer programs, wherein when the computer programs are executed by a processor, the method according to any one of claims 1-7 or the method according to 8 is implemented.
